# EUROPEAN PATENT APPLICATION

(11) **EP 4 387 130 A1**
(43) Date of publication of application: **19.06.2024**
(21) Application number: 22862810.3
(22) Date of filing: 17.06.2022
(51) Int. Cl.: H04J 3/06

(54) **TIME SYNCHRONIZATION MONITORING METHOD**

(30) Priority: 02.09.2021 CN 202111041048; 26.11.2021 CN 202111422661
(71) Applicant: Huawei Technologies Co., Ltd., Shenzhen, Guangdong 518129 (CN)
(72) Inventor: ZENG, Xiaoyi, Shenzhen, Guangdong 518129 (CN); LYU, Jingfei, Shenzhen, Guangdong 518129 (CN); WANG, Jinhui, Shenzhen, Guangdong 518129 (CN)
(74) Representative: Pfenning, Meinig & Partner mbB
(86) International application number: PCT/CN2022/099427
(87) International publication number: WO 2023/029669

(57) **Abstract**

A method for monitoring time synchronization, an apparatus, and a system are provided. The method includes: A first network device obtains synchronization path information (S401), where the synchronization path information is information about a synchronization path between a first time synchronization device and a time source. The first network device obtains time offset information of a plurality of time synchronization devices (S402), where the time offset information of each of the plurality of time synchronization devices is information about a time offset between the time synchronization device and an upstream time device, and the plurality of time synchronization devices are time synchronization devices on the synchronization path. The first network device calculates a time offset of the synchronization path based on the synchronization path information and the time offset information of the plurality of time synchronization devices (S403). The first network device may monitor an offset between time of each time synchronization device and time of the time source, so that accuracy of monitoring time synchronization is improved. In addition, no additional time source needs to be deployed, so that deployment difficulty is reduced.

## Description

This application claims priorities to Chinese Patent Application No. 202111041048.3, filed on September 2, 2021 and entitled "METHOD FOR MONITORING PTP SYNCHRONIZATION", and to Chinese Patent Application No. 202111422661.X, filed on November 26, 2021 and entitled "METHOD FOR MONITORING TIME SYNCHRONIZATION", both of which are incorporated herein by reference in their entireties.

### TECHNICAL FIELD

The present invention relates to the communication field, and in particular, to a method for monitoring time synchronization.

### BACKGROUND

In a 5G bearer network, data is sent between base stations in a time division multiplexing mode. This sending mode has a high requirement on accuracy of time synchronization between the base stations. For example, in the 5G bearer network, the time synchronization between the base stations is required to be within 3 microseconds.

Currently, in the 5G bearer network, a precision time protocol (Precision Time Protocol, PTP) is the mainstream time synchronization mode for bearer network devices (including devices in a core layer, an aggregation layer, and an access layer). A time server BITS is used as a time source of the bearer network devices and transmits time synchronization-related information hop by hop from the time source to the base stations. A device of each hop performs time synchronization with an upstream device, to finally implement timing for the base stations.

In the bearer network, a device that performs time synchronization may encounter an abnormality in time synchronization with an upstream device due to a device exception or discarding of time synchronization information. As a result, time synchronization between a base station and the time source is inaccurate, and data transmission of the base station is affected. Therefore, a method for monitoring time synchronization is required in the network to monitor accuracy of time synchronization in the network.

### SUMMARY

In view of this, embodiments of this application provide a method for monitoring time synchronization, an apparatus, and a system. A first network device obtains synchronization path information, where the synchronization path information is information about a synchronization path between a first time synchronization device and a time source. The first network device obtains time offset information of a plurality of time synchronization devices, where the time offset information of each of the plurality of time synchronization devices is information about a time offset between the time synchronization device and an upstream time device, and the plurality of time synchronization devices are time synchronization devices on the synchronization path. The first network device calculates an offset between time of the first time synchronization device and time of the time source based on the synchronization path information and the time offset information of the plurality of time synchronization devices. Therefore, the first network device may monitor an offset between time of each time synchronization device and the time of the time source, so that accuracy of monitoring time synchronization is improved. In addition, no additional time source needs to be deployed in a network, so that deployment difficulty is reduced.

Technical solutions provided in the embodiments of this application are as follows:
According to a first aspect, this application provides a method for monitoring time synchronization. The method includes: A first network device obtains synchronization path information, where the synchronization path information is information about a synchronization path between a first time synchronization device and a time source. The first network device obtains time offset information of a plurality of time synchronization devices, where the time offset information of each of the plurality of time synchronization devices is information about a time offset between the time synchronization device and an upstream time device, and the plurality of time synchronization devices are time synchronization devices on the synchronization path. The first network device calculates an offset between time of the first time synchronization device and time of the time source based on the synchronization path information and the time offset information of the plurality of time synchronization devices.

Based on the solution provided in this embodiment, the first network device may monitor an offset between time of each time synchronization device and the time of the time source, so that accuracy of monitoring time synchronization is improved. In addition, no additional time source needs to be deployed in a network, so that deployment difficulty is reduced.

In a possible implementation, the time offset information of each time synchronization device includes a time offset, where the time offset is an offset between time of the time synchronization device and time of the upstream time device.

In a possible implementation, that the first network device calculates an offset between time of the first time synchronization device and time of the time source based on the synchronization path information and the time offset information of the plurality of time synchronization devices includes: The first network device calculates the offset between the time of the first time synchronization device and the time of the time source based on the synchronization path information and time offsets in the time offset information of the plurality of time synchronization devices.

In a possible implementation, that the first network device calculates the offset between the time of the first time synchronization device and the time of the time source based on the synchronization path information and time offsets in the time offset information of the plurality of time synchronization devices includes: The first network device adds the time offsets in the time offset information of the plurality of time synchronization devices, to obtain the offset between the time of the first time synchronization device and the time of the time source.

In a possible implementation, the time offset information of each time synchronization device further includes a timestamp, and the timestamp is used by the first network device to calculate the offset between the time of the first time synchronization device and the time of the time source.

In a possible implementation, a range of timestamps in the time offset information of the plurality of time synchronization devices is within one time period.

In a possible implementation, when the synchronization path meets a first condition, the first network device calculates the offset between the time of the first time synchronization device and the time of the time source based on the synchronization path information and the time offset information of the plurality of time synchronization devices.

In a possible implementation, the first condition is that performance of a device on the synchronization path is abnormal.

In a possible implementation, the method according to the first aspect further includes: The first network device sends a request to the plurality of time synchronization devices on the synchronization path based on the synchronization path information, where the request is used to request the time offset information of the time synchronization devices.

In a possible implementation, the synchronization path does not include the first network device.

In a possible implementation, the synchronization path includes the first network device.

According to a second aspect, this application provides a method for monitoring time synchronization. The method includes: A time synchronization device on a synchronization path sends time offset information of the time synchronization device to a first network device, where the time offset information is information about a time offset between the time synchronization device and an upstream time device, and the time offset information is used by the first network device to calculate a time offset of the synchronization path.

In a possible implementation, the time offset information of the time synchronization device includes a time offset, the time offset is an offset between time of the time synchronization device and time of the upstream time device, and the time offset is used by the first network device to calculate the time offset of the synchronization path.

In a possible implementation, the time offset information of the time synchronization device further includes a timestamp, and the timestamp is used by the first network device to calculate the time offset of the synchronization path.

In a possible implementation, the time synchronization device receives a request sent by the first network device, where the request is used to request the time offset information of the time synchronization device.

According to a third aspect, this application provides a method for monitoring time synchronization. The method is performed by a communication system, and the communication system includes a first network device and a plurality of time synchronization devices. The method includes: The first network device obtains synchronization path information, where the synchronization path information is information about a synchronization path between a first time synchronization device and a time source. The first time synchronization device sends the synchronization path information to the first network device, where the synchronization path information is the information about the synchronization path between the first time synchronization device and the time source, and the plurality of time synchronization devices include the first time synchronization device. The plurality of time synchronization devices send time offset information of the time synchronization devices to the first network device, where the time offset information of each time synchronization device is information about a time offset between the time synchronization device and an upstream time device, and the plurality of time synchronization devices are time synchronization devices on the synchronization path. The first network device calculates an offset between time of the first time synchronization device and time of the time source based on the synchronization path information and the time offset information of the plurality of time synchronization devices.

In a possible implementation, the time offset information of each time synchronization device includes a time offset, and the first network device adds the time offsets in the time offset information of the plurality of time synchronization devices, to obtain the offset between the time of the first time synchronization device and the time of the time source.

In a possible implementation, the time offset information of each time synchronization device further includes a timestamp, and when a range of timestamps in the time offset information of the plurality of time synchronization devices is within one time period, the first network device adds the time offsets in the time offset information of the plurality of time synchronization devices, to obtain the offset between the time of the first time synchronization device and the time of the time source.

In a possible implementation, the first network device sends a request to the plurality of time synchronization devices on the synchronization path based on the synchronization path information, where the request is used to request the time offset information of the time synchronization devices.

According to a fourth aspect, this application provides a network device. The network device includes a memory and a processor. The memory is configured to store program code. The processor is configured to run instructions in the program code, to enable the network device to perform the method according to any one of the foregoing aspects and any possible implementation of any one of the foregoing aspects. For example, when the network device according to the fourth aspect is used as a first network device to perform the method according to the first aspect, the processor executes the instructions, to enable the network device to: obtain synchronization path information, where the synchronization path information is information about a synchronization path between a first time synchronization device and a time source; further obtain time offset information of a plurality of time synchronization devices, where the time offset information of each of the plurality of time synchronization devices is information about a time offset between the time synchronization device and an upstream time device, and the plurality of time synchronization devices are time synchronization devices on the synchronization path; and further calculate an offset between time of the first time synchronization device and time of the time source based on the synchronization path information and the time offset information of the plurality of time synchronization devices.

According to a fifth aspect, this application provides a network device, including a transceiver unit and a processing unit. The transceiver unit is configured to perform the method according to any one of the foregoing aspects and the receiving and sending operation in any possible implementation of any one of the foregoing aspects. The processing unit is configured to perform the method according to any one of the foregoing aspects and another operation other than the receiving and sending operation in any possible implementation of any one of the foregoing aspects. For example, when the network device according to the fifth aspect is used as a first network device to perform the method according to the first aspect, the transceiver unit is configured to: receive synchronization path information of a synchronization path other than the first network device, where the synchronization path information is information about a synchronization path between a first time synchronization device and a time source; and further receive time offset information of a plurality of time synchronization devices, where the time offset information of each of the plurality of time synchronization devices is information about a time offset between the time synchronization device and an upstream time device, and the plurality of time synchronization devices are time synchronization devices on the synchronization path. The processing unit is configured to: when the first network device is on the synchronization path, obtain synchronization path information and time offset information of the first network device; and further calculate an offset between time of the first time synchronization device and time of the time source based on the synchronization path information and the time offset information of the plurality of time synchronization devices.

According to a sixth aspect, this application provides a network device. The network device includes a communication interface and a processor. The communication interface is configured to perform the method according to any one of the foregoing aspects and the receiving and sending operation in any possible implementation of any one of the foregoing aspects. The processor is configured to perform the method according to any one of the foregoing aspects and another operation other than the receiving and sending operation in any possible implementation of any one of the foregoing aspects. For example, the communication interface is configured to: receive synchronization path information of a synchronization path other than a first network device, where the synchronization path information is information about a synchronization path between a first time synchronization device and a time source; and further receive time offset information of a plurality of time synchronization devices, where the time offset information of each of the plurality of time synchronization devices is information about a time offset between the time synchronization device and an upstream time device, and the plurality of time synchronization devices are time synchronization devices on the synchronization path. The processor is configured to: when the first network device is on the synchronization path, obtain synchronization path information and time offset information of the first network device; and further calculate an offset between time of the first time synchronization device and time of the time source based on the synchronization path information and the time offset information of the plurality of time synchronization devices.

According to a sixth aspect, this application provides a communication system. The communication system includes a first network device and a time synchronization device. The first network device may be the network device according to any one of the fourth aspect to the sixth aspect, and is configured to perform some or all operations performed by the first network device in any one of the foregoing aspects and any possible implementation. The time synchronization device may be the network device according to any one of the fourth aspect to the sixth aspect, and is configured to perform some or all operations performed by the time synchronization device in any one of the foregoing aspects and any possible implementation.

According to a seventh aspect, this application provides a computer-readable storage medium. The computer-readable storage medium stores instructions, and when the instructions run on a processor, the processor is enabled to perform the method according to any one of the foregoing aspects and some or all operations included in any possible implementation of any one of the foregoing aspects.

According to an eighth aspect, this application provides a computer program product. The computer program product includes instructions, and when the instructions run on a processor, the processor is enabled to perform the method according to any one of the foregoing aspects and some or all operations included in any possible implementation of any one of the foregoing aspects.

According to the technical solution of this application, the first network device may monitor an offset between time of each time synchronization device and the time of the time source, so that accuracy of monitoring time synchronization is improved. In addition, no additional time source needs to be deployed in a network, so that deployment difficulty is reduced.

### BRIEF DESCRIPTION OF DRAWINGS

FIG. 1 is a schematic diagram of a scenario according to an embodiment of this application;
FIG. 2 is a schematic diagram of a time synchronization method according to an embodiment of this application;
FIG. 3 is a schematic diagram of a method for monitoring time synchronization according to an embodiment of this application;
FIG. 4 is a schematic diagram of another method for monitoring time synchronization according to an embodiment of this application;
FIG. 5 is a flowchart of a method for monitoring time synchronization of a first network device according to an embodiment of this application;
FIG. 6 is a flowchart of a method for monitoring time synchronization of a time synchronization device according to an embodiment of this application;
FIG. 7 is a schematic diagram of a structure of a network device according to an embodiment of this application;
FIG. 8 is a schematic diagram of a structure of a network device according to an embodiment of this application; and
FIG. 9 is a schematic diagram of a structure of a network device according to an embodiment of this application.

### DESCRIPTION OF EMBODIMENTS

Detailed descriptions are separately provided through specific embodiments below.

Before embodiments of this application are described, some technical terms in this application are briefly described.

Time offset (offset): The time offset is a time difference between two devices. The time offset indicates accuracy of time synchronization between the two devices. If the time offset is within a specified range, the two devices are synchronized in time.

Boundary clock (Boundary Clock, BC): The BC is a device that participates in time synchronization. During time synchronization, a device that supports a BC mode receives, sends, and analyzes time synchronization related messages based on the PTP protocol, and calculates a time offset between the device and an upstream device of the device.

Transparent clock (Transparent Clock, TC): The TC is a device that does not participate in time synchronization. During time synchronization, a device that supports a TC mode directly forwards time synchronization-related messages.

Time synchronization device: The time synchronization device is a device that supports a BC mode.

Synchronization path: The synchronization path is a path between a time synchronization device and a time source (including the time synchronization device, but excluding the time source).

Upstream time device: When a time synchronization device on a synchronization path is a BC device connected to a time source, the upstream time device of the time synchronization device is the time source. When there is at least one BC device between the time synchronization device on the synchronization path and the time source, the upstream time device of the time synchronization device is the BC device upstream of the time synchronization device.

Synchronization path information: The synchronization path information includes information about each node on a synchronization path, where the information about each node is information that uniquely identifies the node, for example, a node number.

Active time source (Grand Master, GM): The active time source is a time reference for a network device. Two time sources are deployed in a network and work in active/standby mode. One is the GM, and the other is a standby time source (Backup Master, BM).

Time synchronization information: The time synchronization information is information that a time synchronization device needs to be synchronous with an upstream device during time synchronization according to the PTP protocol. The time synchronization information includes PTP protocol messages and the like.

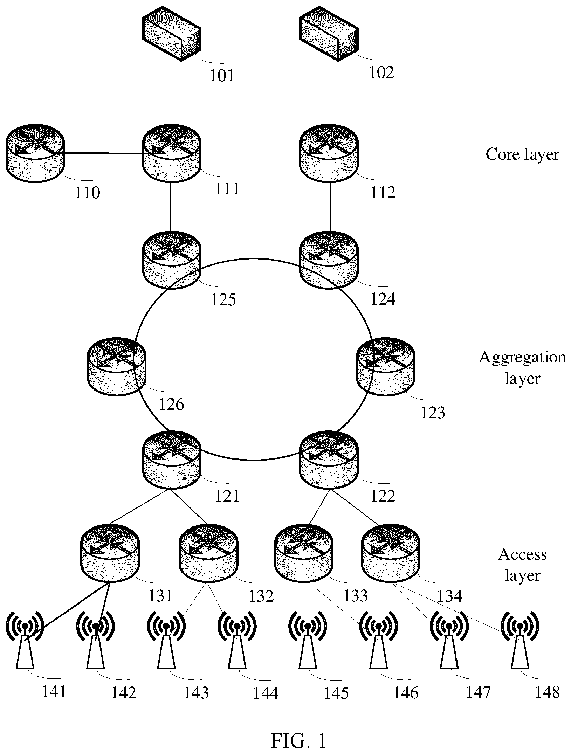

FIG. 1 is a schematic diagram of a scenario according to an embodiment of this application. The scenario shown in FIG. 1 is described below. In FIG. 1, the scenario includes a time source, a core layer device, an aggregation layer device, an access layer device, and a base station. The time source device is a time reference for the entire network, and may be a BITS time source host or another network device. In FIG. 1, a device 101 and a device 102 are time source devices, the device 101 is an active time source, and the device 102 is a standby time source. The core layer forwarding device, the aggregation layer device, the access layer device, and the base station are responsible for forwarding time synchronization information and synchronizing time with an upstream device, where the core layer device, the aggregation layer device, and the access layer device may include, but are not limited to, devices having a forwarding function, for example, a switch or an access router. In FIG. 1, a device 111 and a device 112 are core layer devices, a device 121 to a device 126 are aggregation layer devices, and a device 131 to a device 134 are access layer devices. The base station may include, for example, but is not limited to, a 4G base station or a 5G base station. In FIG. 1, a device 141 to a device 148 are base stations. A control and management device is responsible for monitoring accuracy of time synchronization between network devices, and a function of control and management may be implemented by hardware, software, or a combination of software and hardware. In FIG. 1, a device 110 is the control and management device. For example, FIG. 1 shows a connection manner. The time source device 101 is connected to the core layer device 111. The time source device 102 is connected to the core layer device 112. The core layer device 111 is connected to the aggregation layer device 125. The core layer device 112 is connected to the aggregation layer device 124. The aggregation layer device 121 to the aggregation layer device 126 are connected in sequence. Two access layer devices are connected to one aggregation layer device. For example, the access layer devices 131 and 132 are connected to the aggregation layer device 121. Two base stations access a network through one access layer device. For example, the base station 141 and the base station 142 are connected to the access layer device 131, the base station 143 and the base station 144 are connected to the access layer device 132. At the core layer, one control and management device 110 is connected to the device 111. It should be understood that a communication link in this application includes not only a wired link, but also a wireless link. In FIG. 1, only two core layer forwarding devices, one core layer control and management device, six aggregation layer devices, four access layer devices, and eight base stations are shown as an example. The network may include any other quantity of core layer forwarding devices, core layer control and management devices, aggregation layer devices, access layer devices, and base stations.

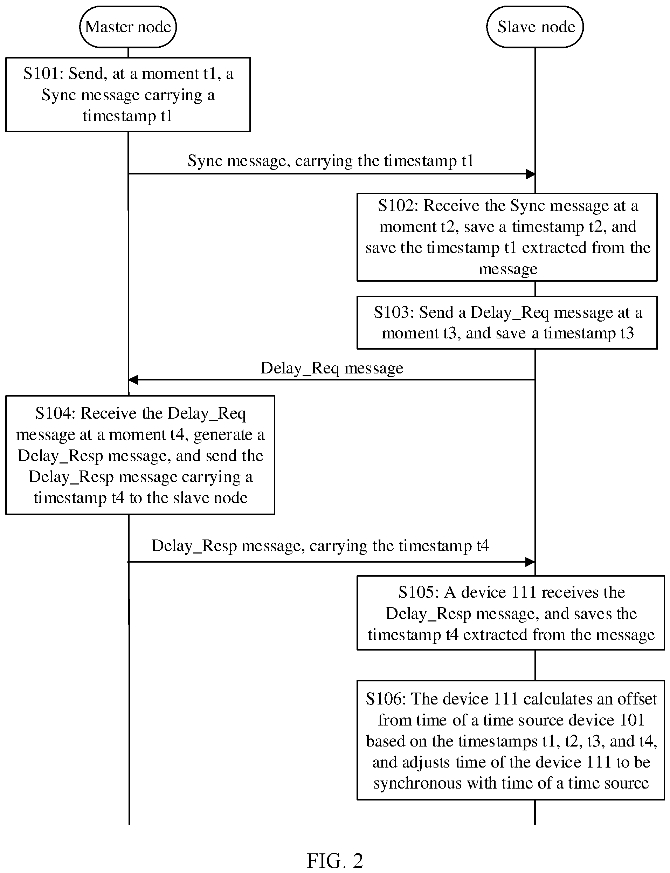

A method 100 for performing time synchronization according to the PTP protocol is described below with reference to FIG. 2 by using the scenario in FIG. 1 as an example. A time synchronization process between the device 111 and the device 101 is used as an example for description below. In this case, a master node shown in FIG. 2 corresponds to the device 101 shown in FIG. 1, and a slave node shown in FIG. 2 corresponds to the device 111 shown in FIG. 1. The method includes S101 to S106.

S101: The master node sends, at a moment t1, a synchronization Sync message carrying a timestamp t1.

S102: The slave node receives the Sync message at a moment t2, saves a timestamp t2, and saves the timestamp t1 extracted from the message.

S103: The slave node sends a delay request (Delay Request, Delay_Req) message at a moment t3, and saves a timestamp t3.

S104: The master node receives the Delay_Req message at a moment t4, generates a delay response (Delay Response, Delay_Resp) message, and sends the Delay_Resp message carrying a timestamp t4 to the slave node.

S105: The slave node receives the Delay_Resp message, and saves the timestamp t4 extracted from the message.

S106: The slave node calculates a time offset from time of the master node based on the timestamps t1, t2, t3, and t4, and adjusts time of the slave node to be synchronous with the time of the master node.

In S106, the slave node calculates the time offset between the slave node and the master node according to a formula: Offset = [(t2 - 11) - (t4 - t3)]/2, where offset indicates the time offset between the slave node and the master node. Then, the slave node adjusts the time of the slave node based on the time offset to be synchronous with the time of the master node.

In FIG. 1, time synchronization information is transmitted hop by hop from the active time source device 101 to the base stations by using time of the main time source device 101 as a reference, and a time synchronization device of each hop performs time synchronization with an upstream device. For a specific implementation process of time synchronization, refer to the description of the method 100. In this way, timing for the base stations is finally implemented. However, in the network shown in FIG. 1, the time synchronization device may encounter an abnormality in time synchronization with the upstream device due to a device exception or discarding of time synchronization information. As a result, time synchronization between the base station and the time source is inaccurate, and data transmission of the base station is affected. Therefore, a method for monitoring time synchronization is required in the network to monitor accuracy of time synchronization in the network.

The scenario in FIG. 1 is still used as an example below, to describe a method for monitoring out-of-band time synchronization. In the method, in a monitoring process of time synchronization, an additional time source device, for example, a device 150, needs to be deployed in the network. The additional time source device 150 may be connected to any network device, for example, connected to devices in a core layer, an aggregation layer, and an access layer, or connected to the base station. The time source device 150 has a same time as the time source 101 in FIG. 1, and is used as a reference time source for time synchronization monitoring. An example in which the device 150 is connected to the forwarding device 112 in the core layer to monitor accuracy of time synchronization of the network device 111 is used for description below. In the method for monitoring out-of-band time synchronization, the additional time source device 150 is used as a monitoring device, and is equivalent to the slave node in the method 100. The time synchronization device 111 is equivalent to the master node in the method 100. The device 150 and the device 111 perform a process of S101 to S106 in the method 100, so that the device 150 obtains four timestamps, and then calculates a time offset between time of the device 150 and time of the device 111 according to a formula. Because the device 111 is time-synchronized with the upstream device 101, a time offset between the time of the device 111 and the time of the device 101 is kept within a limited range, and the time of the monitoring device 150 is the same as the time of the time source 101. In this case, the time offset between the time of the monitoring device 150 and the time of the device 111 should also be kept within a same limited range. If the time offset between the monitoring device 150 and the device 111 is not within a limited range, it indicates that the time of the device 111 is not synchronized with the time of the upstream device 101. The device 150 may determine accuracy of time synchronization between the device 111 and the time source 101 by determining whether the time offset obtained through calculation is within a limited range.

In the method for monitoring out-of-band time synchronization described above, an additional time source needs to be deployed in the network as a time reference for monitoring, which increases deployment costs. In addition, a device in the network needs to support both a BC mode and a TC mode, which increases complexity of the device. For example, when a time synchronization device synchronizes time with the time source 101, the time synchronization device supports the BC mode. When the device needs to support out-of-band time synchronization, a network device between a monitoring device and a monitored time synchronization device needs to support the TC mode and transparently transmit time synchronization information. For example, when the device 150 monitors the device 123, the device 124 and the device 112 need to support the TC mode. A method for monitoring in-band time synchronization can effectively solve the preceding problem.

The scenario shown in FIG. 1 is still used as an example below, to describe a method for monitoring in-band time synchronization. The method may be applied to any network device in FIG. 1, including: a time source, a control and management device, a core layer device, an aggregation layer device, an access layer device, or a base station. An example in which the control and management device 110 is used as a monitoring device to monitor time synchronization accuracy of the network device 125 is used for description below. First, the device 125 performs time synchronization with the upstream device 111 according to the method described in the method 100. The device 125 calculates a time offset between time of the device 125 and time of the device 111, and saves the time offset. Then, the device 125 sends the saved time offset to the device 110, and the device 110 obtains a time offset between time of the device 125 and time of an upstream device of the device 125. According to the same method, the device 110 may also obtain a time offset between time of another time synchronization device and time of an upstream device of the another time synchronization device. In the method for monitoring in-band time synchronization, the monitoring device 110 can only obtain a time offset between each time synchronization device and an upstream device of the time synchronization device, and cannot obtain a time offset between each time synchronization device and a time source. If time synchronization of the upstream device is incorrect, even if time synchronization between the time synchronization device and the upstream device is accurate, times of the time synchronization device and the time source are not synchronized. For example, assuming that a synchronization error between the device 111 and the device 101 is large, and the device 125 and the device 111 are time-synchronized, times of the device 125 and the time source are not synchronized. In the method for monitoring in-band time synchronization, the monitoring device cannot determine, based on a time offset sent by the time synchronization device, whether the upstream device of the monitoring device is synchronized accurately, and therefore cannot infer accuracy of time synchronization between the time synchronization device and the time source.

In view of this, to resolve the foregoing technical problem, this application provides a method for monitoring time synchronization, which may be applied to the scenario in FIG. 1. In the scenario in FIG. 1, there are a plurality of synchronization paths. For example, device 111-device 125-device 126-device 121-device 131-device 141 is a synchronization path, and device 111-device 125-device 126-device 121 is also a synchronization path, which is not listed herein. An example in which the synchronization path is device 111-device 125-device 126-device 121-device 131-device 141 and the monitoring device is the control and management device 110 is used for description below. The device 110 receives synchronization path information, where the synchronization path information is information about the path of device 111-device 125-device 126-device 121-device 131-device 141. The device 110 receives information about a time offset between time of a time synchronization device on the synchronization path and time of an upstream time device of the time synchronization device. The first network device may calculate a time offset between the device 141 and the time source based on the synchronization path information and the time offset information of the plurality of time synchronization devices. For example, the device 110 may obtain, through the received synchronization path information, that device 111-device 125-device 126-device 121-device 131-device 141 is a synchronization path. Then, the device 110 adds time offsets of devices corresponding to the synchronization path, that is, offset111 + offset125+ offset126 + offset121 + offset131 + offset141 may obtain an offset between time of the device 141 and time of the time source. It can be learned that in the method provided in this application, no additional time source needs to be deployed, so that deployment difficulty is reduced, and an offset between time of each time synchronization device and time of a time source can be monitored, so that accuracy of monitoring time synchronization is improved.

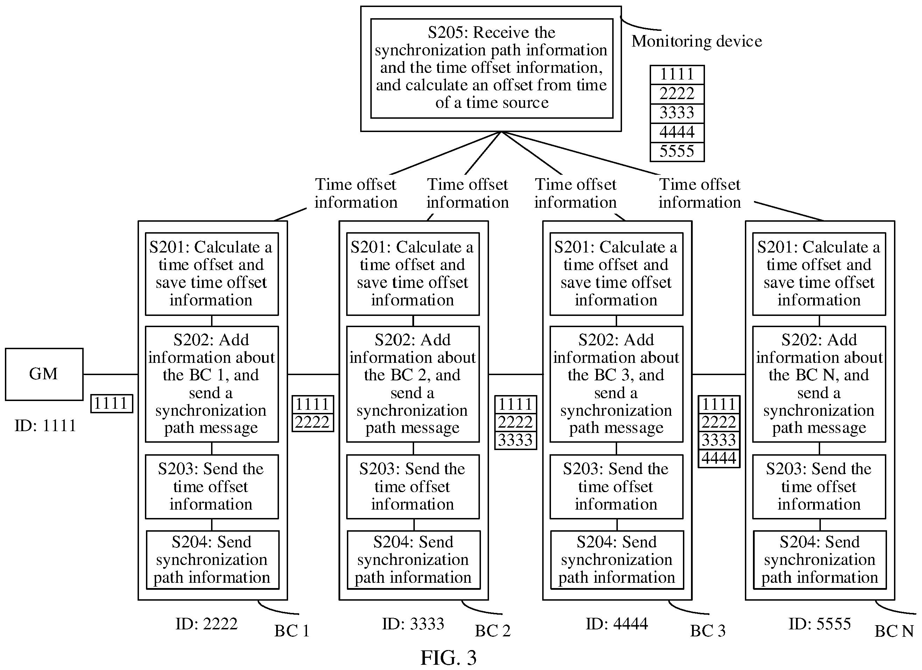

A method 200 for monitoring time synchronization provided in this application is described below with reference to FIG. 3. The method 200 shown in FIG. 3 may be applied to the scenario shown in FIG. 1. A monitoring device in FIG. 3 is not a device on a synchronization path. The monitoring device in FIG. 3 corresponds to the control and management device 110, the time source 101 or 102, or the network forwarding device including devices in a core layer, an aggregation layer, and an access layer or the base station in FIG. 1. A BC device in FIG. 3 corresponds to the network forwarding device or the base station in FIG. 1. A GM device in FIG. 3 may correspond to the time source device 101 or 102 in FIG. 1, or may correspond to any device, for example, the device 111. The method 200 includes S201 to S205.

S201: The BC device calculates a time offset and saves time offset information.

In a specific implementation, the time offset information includes a time offset. For a method for obtaining, by the BC device, four timestamps t1, t2, t3, and t4 and calculating an offset from time of an upstream device based on the four timestamps, refer to related descriptions of the method 100. Details are not described herein again.

In a specific implementation, the BC device may be directly connected to the upstream device, or may be connected through one or more devices supporting the TC mode.

In a specific implementation, the time offset information includes a time offset and a timestamp, and when the BC device stores the time offset, the BC device also stores a timestamp for generating the time offset.

S202: The BC device receives a synchronization path message sent by an upstream time device, and sends, to a downstream device, a synchronization path message to which information about the BC device is added.

In a specific implementation, each time synchronization device has a unique clock number Clock ID in the entire network, and the synchronization path message is an Announce message in the PTP protocol and carries the Clock ID.

In a specific implementation, after receiving the Announce message, each BC device parses the Announce message to obtain Clock IDs of the time source and all upstream time synchronization devices, and sends an Announce message including Clock IDs of the time source, all upstream time synchronization devices, and the BC device to a next-hop device on the synchronization path. S203: The BC device sends the time offset information to the monitoring device.

In a specific implementation, the BC device periodically sends the time offset information to the monitoring device, where the time offset information includes a time offset between time of the BC device and time of an upstream BC device.

In a specific implementation, the BC device periodically sends the time offset information to the monitoring device, where the time offset information includes a time offset and a timestamp, the timestamp is a time at which the BC device generates the time offset, and the timestamp is used by the monitoring device to align a timestamp of the received time offset.

In a specific implementation, the BC device may further respond to the time offset information based on an indication of a request message sent by the monitoring device, where the time offset information includes a time offset between time of the BC device and time of an upstream BC device.

In a specific implementation, the BC device may further respond to the time offset information based on an indication of a request message sent by the monitoring device, where the time offset information includes a time offset and a timestamp, the timestamp is a time at which the BC device generates the time offset, and the timestamp is used by the monitoring device to align time of the received time offset.

S204: The BC device sends synchronization path information to the monitoring device.

In a specific implementation, the BC device sends the Announce message including Clock IDs of the time source, all upstream time synchronization devices, and the BC device to the monitoring device.

In a specific implementation, the BC device may further send, based on an indication of a request sent by the monitoring device, the Announce message including Clock IDs of the time source, all upstream time synchronization devices, and the BC device to the monitoring device.

S205: The monitoring device receives the synchronization path information and time offset information of a plurality of BC devices, and calculates a time offset between the BC device and the time source based on the synchronization path information and the time offset information of the plurality of BC devices.

In a specific implementation, the monitoring device receives the synchronization path information from a BC device, for example, a BC N, where the synchronization path information includes information about all nodes between the time source device and the BC N device, that is, includes information about Clock IDs of a BC 1, a BC 2, a BC 3 and a BC 4. The monitoring device may obtain a synchronization path, that is, BC 1-BC 2-BC 3-BC 4, between the time source and a last-hop BC device on the synchronization path based on the synchronization path information, or may obtain a synchronization path between the time source and any hop intermediate BC device on the synchronization path based on the synchronization path information, for example, BC 1-BC 2. It may be understood that the receiving the synchronization path information from the BC N is merely an example, and the monitoring device may receive the synchronization path information from any BC device.

In a specific implementation, the monitoring device adds time offsets of BC devices on the synchronization path included in the synchronization path information, to obtain a time offset of the synchronization path. For example, when the synchronization path information is the information about the synchronization path between the time source and the last-hop BC device on the synchronization path, the monitoring device adds time offsets in the received time offset information of the BC1 device to the BC N device, to obtain a time offset between the BC N device and the time source, and the monitoring device adds time offsets in time offset information sent by the BC1 device and the BC 2 device, to obtain a time offset between the BC 2 device and the time source.

In a specific implementation, the time offset information includes a timestamp, and the monitoring device aligns the received time offset information of the plurality of BC devices based on the timestamp, and then uses a time offset in the aligned time offset information to perform calculation.

In a specific implementation, the monitoring device sends a request to the BC device to request time offset information of the BC device.

In a specific implementation, the monitoring device sends a request to the BC device to request synchronization path information of the BC device.

In a specific implementation, the monitoring device periodically receives the synchronization path information and the time offset information, and the monitoring device periodically calculates the time offset of the synchronization path based on the synchronization path information and the time offset information.

In a specific implementation, the monitoring device periodically receives the synchronization path information and the time offset information, and when the monitoring device detects that performance of a device on the synchronization path is abnormal, the monitoring device calculates the time offset of the synchronization path based on the synchronization path information and the time offset information.

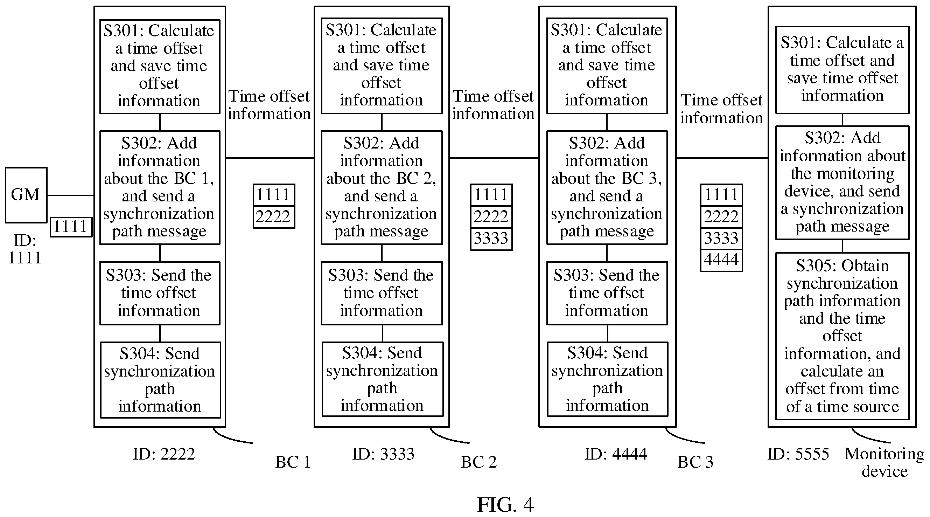

A method 300 for monitoring time synchronization provided in this application is described below with reference to FIG. 4. The method 300 shown in FIG. 4 may be applied to the scenario shown in FIG. 1. A monitoring device in FIG. 4 is not a device on a synchronization path. The monitoring device in FIG. 4 corresponds to the network forwarding device including devices in a core layer, an aggregation layer, and an access layer or the base station in FIG. 1. A BC device in FIG. 4 corresponds to the network forwarding device or the base station in FIG. 1. A GM device in FIG. 4 may correspond to the time source device 101 or 102 in FIG. 1, or may correspond to any device, for example, the device 111. The method 300 includes S301 to S305.

S301: The BC device calculates a time offset and saves time offset information.

In a specific implementation, the monitoring device is also a BC device. For a process in which the monitoring device and another BC device calculate a time offset and save time offset information, refer to related implementation of S201. Details are not described herein again.

S302: The BC device receives a synchronization path message sent by an upstream time device, and sends, to a downstream device, a synchronization path message to which information about the BC device is added.

In a specific implementation, the monitoring device is also a BC device. For a method in which the monitoring device and another BC device receive the synchronization path message sent by the upstream device, add path information about the device to the message, and send the synchronization path message to the downstream device, refer to related implementation of S202. Details are not described herein again.

S303: The BC device sends the time offset information to the monitoring device.

In a specific implementation, for a method in which the another BC device sends the time offset information to the monitoring device, refer to related implementation of S203. Details are not described herein again.

S304: The BC device sends synchronization path information to the monitoring device.

In a specific implementation, for a method in which the another BC device sends the synchronization path information to the monitoring device, refer to related implementation of S204. Details are not described herein again.

S305: The monitoring device obtains the synchronization path information and time offset information of a plurality of BC devices, and calculates a time offset between the BC device and a time source based on the synchronization path information and the time offset information of the plurality of BC devices.

In a specific implementation, for a method in which the monitoring device receives the synchronization path information and time offset information of a plurality of other BC devices from another BC device, refer to related implementation of S205. Details are not described herein again. In addition, the monitoring device further needs to obtain node information and time offset information of the monitoring device.

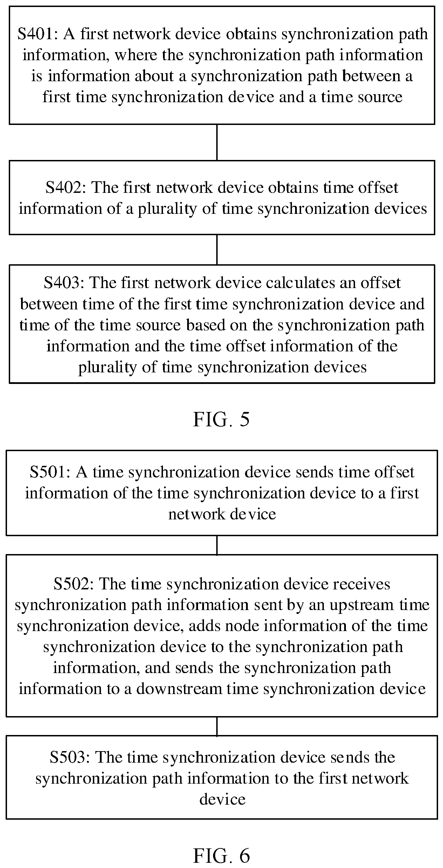

A method 400 for monitoring time synchronization provided in this application is described below with reference to FIG. 5. The method 400 may be applied to the scenario shown in FIG. 1. A first network device corresponds to the control and management device 110, the time source 101 or 102, or the network forwarding device including devices in a core layer, an aggregation layer, and an access layer or the base station in FIG. 1. A first time synchronization device corresponds to the network forwarding device including the devices in the core layer, the aggregation layer, and the access layer or the base station in FIG. 1. The method 400 may be specifically used to implement the method 200 or method 300. When the method 400 implements the method 200 or method 300, the first network device in the method 400 is equivalent to the monitoring device in the method 200 or method 300, and the first time synchronization device is equivalent to the BC device in the method 200 or method 300. The method 400 includes S401 to S403.

S401: The first network device obtains synchronization path information, where the synchronization path information is information about a synchronization path between the first time synchronization device and a time source.

In a specific implementation, the first network device may obtain the synchronization path information in the following two manners.

Manner 1: When the first network device is not a device on the synchronization path, the first network device receives synchronization path information sent by a time synchronization device.

In an implementation, the time synchronization device is the first time synchronization device, and the synchronization path information is the information about the synchronization path between the first time synchronization device and the time source.

In another implementation, the monitoring device receives synchronization path information sent by a downstream device of the first time synchronization device, where the synchronization path information includes information about the synchronization path between the first time synchronization device and the time source.

For a specific implementation of manner 1, refer to related descriptions in which the monitoring device receives the synchronization path information in S205. Details are not described herein again.

Manner 2: When the first network device is a device on the synchronization path, the first network device receives synchronization path information sent by an upstream device, and then adds node information of the first network device to the synchronization path.

For related descriptions in which the first network device receives the synchronization path information sent by the upstream device, refer to related descriptions in which the monitoring device receives the synchronization path information in S305. Details are not described herein again.

For a method in which the first network device receives the synchronization path information sent by the upstream device and then adds the node information of the first network device to the synchronization path, refer to related descriptions in S305. Details are not described herein again.

S402: The first network device obtains time offset information of a plurality of time synchronization devices, where the time offset information of each of the plurality of time synchronization devices is information about a time offset between the time synchronization device and an upstream time device, and the plurality of time synchronization devices are time synchronization devices on the synchronization path.

In a specific implementation, the first network device may obtain the synchronization path information in the following two manners.

Manner 1: When the first network device is not a device on the synchronization path, the first network device receives the time offset information of the plurality of time synchronization devices.

For a method in which the first network device receives the time offset information of the plurality of time synchronization devices, refer to related descriptions in S205. Details are not described herein again.

Manner 2: When the first network device is a device on the synchronization path, the first network device receives time offset information of another time synchronization device, and further needs to obtain information about a time offset between the first network device and an upstream device of the first network device.

For a method in which the first network device receives time offset information of a plurality of other time synchronization devices, refer to related descriptions in S305. Details are not described herein again.

For a method in which the first network device obtains time offset information of the first network device, refer to related descriptions in S305. Details are not described herein again.

S403: The first network device calculates an offset between time of the first time synchronization device and time of the time source based on the synchronization path information and the time offset information of the plurality of time synchronization devices.

In a specific implementation, for a process in which the first network device calculates the offset from the time of the time source based on the synchronization path information and the time offset information of the plurality of time synchronization devices, refer to related descriptions in which the monitoring device calculates the time offset in S205. Details are not described herein again.

A method 500 for monitoring time synchronization provided in this application is described below with reference to FIG. 6. The method 500 may be applied to the scenario shown in FIG. 1. A first network device corresponds to the control and management device 110, the time source 101 or 102, or the network forwarding device including devices in a core layer, an aggregation layer, and an access layer or the base station in FIG. 1. A time synchronization device corresponds to the network forwarding device including the devices in the core layer, the aggregation layer, and the access layer or the base station in FIG. 1. The method 500 may be specifically used to implement the method 200 or method 300. When the method 400 implements the method 200 or method 300, the first network device in the method 400 is equivalent to the monitoring device in the method 200 or method 300, and the time synchronization device is equivalent to the BC device in the method 200 or method 300. The method 500 includes S501 to S503.

S501: A time synchronization device on a synchronization path sends time offset information of the time synchronization device to the first network device, where the time offset information is information about a time offset between the time synchronization device and an upstream time device, and the time offset information is used by the first network device to calculate a time offset of the synchronization path.

For a manner in which the time synchronization device calculates a time offset and saves time offset information, refer to related descriptions in S201. Details are not described herein again.

For a manner in which the time synchronization device sends the time offset information to the first network device, refer to related descriptions in S203. Details are not described herein again.

Optionally, the method includes S502 and S503.

S502: The time synchronization device receives the synchronization path information sent by an upstream time device, adds node information of the time synchronization device to the synchronization path information, and sends the synchronization path information to a downstream time synchronization device.

For a method in which the time synchronization device sends the synchronization path information to the downstream time synchronization device, refer to related descriptions in S202. Details are not described herein again.

S503: The time synchronization device sends the synchronization path information to the first network device.

For a method in which the time synchronization device sends the synchronization path information to the first network device, refer to related descriptions in S204. Details are not described herein again.

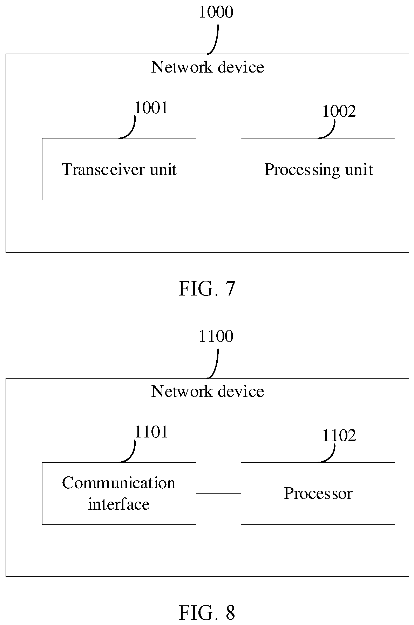

In addition, as shown in FIG. 7, an embodiment of this application further provides a network device 1000. FIG. 7 is a schematic diagram of a structure of a network device 1000 according to an embodiment of this application. The network device 1000 shown in FIG. 7 includes a transceiver unit 1001 and a processing unit 1002. The network device 1000 may be configured to perform the method 200, the method 300, the method 400, or the method 500 in the foregoing embodiments.

In an example, the network device 1000 may perform the method 200 in the foregoing embodiment. When the network device 1000 is configured to perform the method 200 in the foregoing embodiment, the network device 1000 is equivalent to the BC device in the method 200. The network device 1000 may be applied to the application scenario shown in FIG. 1, for example, may be the network forwarding device or the base station in the scenario shown in FIG. 1. The transceiver unit 1001 is configured to perform a receiving and sending operation performed by the BC device in the method 200. The processing unit 1002 is configured to perform an operation other than the receiving and sending operation performed by the BC device in the method 200. For example, the transceiver unit 1001 is configured to receive a synchronization path message sent by an upstream device, and is further configured to send the synchronization path message to a downstream device. The processing unit 1002 is configured to calculate a time offset and save time offset information.

In an example, the network device 1000 may perform the method 200 in the foregoing embodiment. When the network device 1000 is configured to perform the method 200 in the foregoing embodiment, the network device 1000 is equivalent to the monitoring device in the method 200. The network device 1000 may be applied to the application scenario shown in FIG. 1, for example, may be the control and management device 110 in the scenario shown in FIG. 1. The transceiver unit 1001 is configured to perform a receiving and sending operation performed by the monitoring device in the method 200. The processing unit 1002 is configured to perform an operation other than the receiving and sending operation performed by the monitoring device in the method 200. For example, the transceiver unit 1001 is configured to receive synchronization path information and time offset information of a plurality of BC devices. The processing unit 1002 is configured to calculate a time offset between the BC device and a time source based on the synchronization path information and the time offset information of the plurality of BC devices.

In an example, the network device 1000 may perform the method 300 in the foregoing embodiment. When the network device 1000 is configured to perform the method 300 in the foregoing embodiment, the network device 1000 is equivalent to the BC device in the method 300. The network device 1000 may be applied to the application scenario shown in FIG. 1, for example, may be the network forwarding device or the base station in the scenario shown in FIG. 1. The transceiver unit 1001 is configured to perform a receiving and sending operation performed by the BC device in the method 300. The processing unit 1002 is configured to perform an operation other than the receiving and sending operation performed by the BC device in the method 300. For example, the transceiver unit 1001 is configured to receive a synchronization path message sent by an upstream device, and is further configured to send the synchronization path message to a downstream device. The processing unit 1002 is configured to calculate a time offset and save time offset information.

In an example, the network device 1000 may perform the method 300 in the foregoing embodiment. When the network device 1000 is configured to perform the method 300 in the foregoing embodiment, the network device 1000 is equivalent to the monitoring device in the method 300. The network device 1000 may be applied to the application scenario shown in FIG. 1, for example, may be the control and management device 110 in the scenario shown in FIG. 1. The transceiver unit 1001 is configured to perform a receiving and sending operation performed by the monitoring device in the method 300. The processing unit 1002 is configured to perform an operation other than the receiving and sending operation performed by the monitoring device in the method 300. For example, the transceiver unit 1001 is configured to receive synchronization path information and time offset information of a plurality of BC devices. The processing unit 1002 is configured to calculate a time offset between the BC device and a time source based on the synchronization path information and the time offset information of the plurality of BC devices.

In an example, the network device 1000 may perform the method 400 in the foregoing embodiment. When the network device 1000 is configured to perform the method 400 in the foregoing embodiment, the network device 1000 is equivalent to the first network device in the method 400. The network device 1000 may be applied to the application scenario shown in FIG. 1, for example, may be the control and management device 110 in the scenario shown in FIG. 1. The transceiver unit 1001 is configured to perform a receiving and sending operation performed by the first network device in the method 400. The processing unit 1002 is configured to perform an operation other than the receiving and sending operation performed by the first network device in the method 400. For example, the transceiver unit 1001 is configured to receive synchronization path information, where the synchronization path information is information about a synchronization path between a first time synchronization device and a time source; and is further configured to receive time offset information of a plurality of time synchronization devices. The processing unit 1002 is configured to calculate an offset between time of the first time synchronization device and time of the time source based on the synchronization path information and the time offset information of the plurality of time synchronization devices.

In an example, the network device 1000 may perform the method 500 in the foregoing embodiment. When the network device 1000 is configured to perform the method 500 in the foregoing embodiment, the network device 1000 is equivalent to the time synchronization device in the method 500. The network device 1000 may be applied to the application scenario shown in FIG. 1, for example, may be the network forwarding device or the base station in the scenario shown in FIG. 1. The transceiver unit 1001 is configured to perform a receiving and sending operation performed by the time synchronization device in the method 500. The processing unit 1002 is configured to perform an operation other than the receiving and sending operation performed by the time synchronization device in the method 500. For example, the transceiver unit 1001 is configured to send the time offset information of the time synchronization devices to the first network device. The processing unit 1002 is configured to calculate a time offset and save time offset information.

It should be noted that, in the embodiments of this application, unit division is an example, and is merely logical function division. In actual implementation, another division manner may be used. Functional units in embodiments of this application may be integrated into one processing unit, each of the units may exist alone physically, or two or more units may be integrated into one unit. For example, in the foregoing embodiments, the transceiver unit 1001 and the processing unit 1002 may be a same unit, or may be different units. The integrated unit may be implemented in a form of hardware, or may be implemented in a form of a software function unit.

In addition, as shown in FIG. 8, an embodiment of this application further provides a network device 1100. FIG. 8 is a schematic diagram of a structure of the network device 1100 according to an embodiment of this application. The network device 1100 includes a communication interface 1101 and a processor 1102 connected to the communication interface 1101. For example, the communication interface is an apparatus, for example, a transceiver. The network device 1100 may be configured to perform the method 200, the method 300, the method 400, or the method 500 in the foregoing embodiments. Specifically, the network device 1100 may be used as a monitoring device to perform an operation performed by the monitoring device in the method 200 or the method 300, and the network device 1100 may be used as a BC device to perform an operation performed by the BC device in the method 200 or the method 300. The communication interface 1101 is configured to perform a receiving and sending operation performed by the monitoring device or the BC device in the method 200 or the method 300. The processor 1102 is configured to perform an operation other than the receiving and sending operation performed by the monitoring device or the BC device in the method 200 or the method 300. The network device 1100 may be used as a first network device to perform an operation performed by the first network device in the method 400, and the network device 1100 may be used as a time synchronization device to perform an operation performed by the time synchronization device in the method 500. The communication interface 1101 is configured to perform a receiving and sending operation performed by the first network device or the time synchronization device in the method 400 or the method 500. The processor 1102 is configured to perform an operation other than the receiving and sending operation performed by the first network device or the time synchronization device in the method 400 or the method 500. For example, when the network device 1100 is used as a monitoring device to perform the method 200, the communication interface 1101 is configured to receive synchronization path information and time offset information of a plurality of BC devices. The processor 1102 is configured to calculate a time offset between the BC device and a time source based on the synchronization path information and the time offset information of the plurality of BC devices.

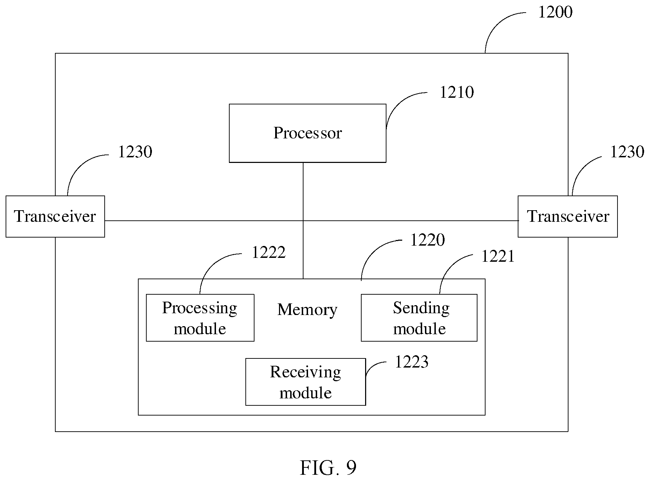

In addition, as shown in FIG. 9, an embodiment of this application further provides a network device 1200. FIG. 9 is a schematic diagram of a structure of a network device according to an embodiment of this application. As shown in FIG. 9, the network device 1200 may include a processor 1210, a memory 1220 coupled to the processor 1210, and a transceiver 1230. The transceiver 1230 may be, for example, a communication interface, an optical module, or the like. The processor 1210 may be a central processing unit (English: central processing unit, CPU for short), a network processor (English: network processor, NP for short), or a combination of a CPU and an NP. Alternatively, the processor may be an application-specific integrated circuit (English: application-specific integrated circuit, ASIC for short), a programmable logic device (English: programmable logic device, PLD for short), or a combination thereof. The PLD may be a complex programmable logic device (English: complex programmable logic device, CPLD for short), a field-programmable gate array (English: field-programmable gate array, FPGA for short), generic array logic (English: generic array logic, GAL for short), or any combination thereof. The processor 1210 may be one processor, or may include a plurality of processors. The memory 1220 may include a volatile memory (English: volatile memory), for example, a random-access memory (English: random-access memory, abbreviated as RAM). Alternatively, the memory 1220 may include a non-volatile memory (English: non-volatile memory), for example, a read-only memory (English: read-only memory, abbreviated as ROM), a flash memory (English: flash memory), a hard disk drive (English: hard disk drive, abbreviated as HDD) or a solid-state drive (English: solid-state drive, abbreviated as SSD). Alternatively, the memory 1220 may include a combination of the foregoing memories. The memory 1220 may be one memory, or may include a plurality of memories. In an implementation, the memory 1220 stores computer-readable instructions, and the computer-readable instructions include a plurality of software modules, for example, a sending module 1221, a processing module 1222, and a receiving module 1223. After executing each software module, the processor 1210 may perform a corresponding operation according to instructions of each software module. In this embodiment, an operation performed by a software module actually refers to an operation performed by the processor 1210 according to instructions of the software module. Optionally, the processor 1210 may also store program code or instructions for executing the solutions of this application. In this case, the processor 1201 does not need to read the program code or the instructions from the memory 1220.

The network device 1200 may be configured to perform the method 200, the method 300, the method 400, or the method 500 in the foregoing embodiments. Specifically, the network device 1200 may be used as a monitoring device to perform an operation performed by the monitoring device in the method 200 or the method 300, and the network device 1200 may be used as a BC device to perform an operation performed by the BC device in the method 200 or the method 300. The network device 1200 may be used as a first network device to perform an operation performed by the first network device in the method 400, and the network device 1200 may be used as a time synchronization device to perform an operation performed by the time synchronization device in the method 500. For example, when the network device 1200 is used as a monitoring device to perform the method 200, the processor 1210 is configured to execute related instructions in the memory 1220, so that the communication apparatus 1200 is configured to: receive synchronization path information and time offset information of a plurality of BC devices; and calculate a time offset between the BC device and a time source based on the synchronization path information and the time offset information of the plurality of BC devices.

An embodiment of this application further provides a computer-readable storage medium. The computer-readable storage medium stores instructions. When the instructions run on a processor, the processor is enabled to perform any one or more operations in the method (for example, the method 200, the method 300, the method 400, or the method 500) according to any one of the foregoing embodiments.

An embodiment of this application further provides a computer program product, including a computer program. When the computer program runs on a processor, the processor is enabled to perform any one or more operations in the method (for example, the method 200, the method 300, the method 400, or the method 500) according to any one of the foregoing embodiments.

An embodiment of this application further provides a communication system, including a first network device and a plurality of time synchronization devices. Structures of the first network device and each of the plurality of time synchronization devices are shown in any one of the network devices corresponding to FIG. 7 to FIG. 9. The communication system is configured to implement some or all of the operations in any one of the method 200, the method 300, the method 400, and the method 500 in the embodiments corresponding to FIG. 3 to FIG. 6.

An embodiment of this application further provides another communication system, including at least one memory and at least one processor. The at least one memory stores instructions, and the at least one processor executes the instructions, so that the communication system implements some or all of the operations in any one of the method 200, the method 300, the method 400, and the method 500 in the foregoing embodiments of this application.

An embodiment of this application further provides a chip system, including a processor. The processor is coupled to a memory. The memory is configured to store a program or instructions. When the processor executes the program or the instructions, the chip system is enabled to implement some or all of the operations in any one of the method 200, the method 300, the method 400, and the method 500 in the foregoing embodiments of this application.

Optionally, there may be one or more processors in the chip system. The processor may be implemented by hardware or software. When the processor is implemented by hardware, the processor may be a logic circuit, an integrated circuit, or the like. When the processor is implemented by software, the processor may be a general-purpose processor, and is implemented by reading software code stored in the memory.

Optionally, there may be one or more memories in the chip system. The memory may be integrated with the processor, or may be disposed separately from the processor. This is not limited in this application. For example, the memory may be a non-transitory processor, for example, a read-only memory ROM. The memory and the processor may be integrated on a same chip, or may be separately disposed on different chips. A type of the memory and a manner of disposing the memory and the processor are not specifically limited in this application.

For example, the chip system may be an FPGA, an ASIC, a system on chip (system on chip, SoC), a CPU, an NP, a digital signal processor (digital signal processor, DSP), a microcontroller (micro controller unit, MCU), a programmable controller (programmable logic device, PLD), or another integrated chip.

In the specification, claims, and accompanying drawings of this application, the terms "first", "second", "third", "fourth", and the like (if existent) are intended to distinguish between similar objects but do not necessarily indicate a specific order or sequence. It should be understood that the data termed in such a way is interchangeable in proper circumstances so that embodiments described herein can be implemented in other orders than the order illustrated or described herein. In addition, terms "include" and "have" and any other variants are intended to cover the nonexclusive inclusion. For example, a process, method, system, product, or device that includes a list of steps or units is not necessarily limited to those expressly listed steps or units, but may include other steps or units not expressly listed or inherent to such a process, method, product, or device.

It may be clearly understood by a person skilled in the art that, for convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical service division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electrical form, a mechanical form, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, service units in embodiments of this application may be integrated into one processing unit, each of the units may exist alone physically, or two or more units may be integrated into one unit. The integrated unit may be implemented in a form of hardware, or may be implemented in a form of a software service unit.

When the integrated unit is implemented in the form of a software service unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The storage medium includes any medium that can store program code, for example, a USB flash drive, a removable hard disk, a read-only memory (ROM, Read-Only Memory), a random access memory (RAM, Random Access Memory), a magnetic disk, or an optical disc.

A person skilled in the art should be aware that in the foregoing one or more examples, services described in the present invention may be implemented by hardware, software, firmware, or any combination thereof. When the present invention is implemented by software, the services may be stored in a computer-readable medium or transmitted as one or more instructions or code in the computer-readable medium. The computer-readable medium includes a computer storage medium and a communication medium, where the communication medium includes any medium that enables a computer program to be transmitted from one place to another. The storage medium may be any available medium accessible to a general-purpose or dedicated computer.

The foregoing specific implementations further describe the objectives, technical solutions, and beneficial effects of the present invention in detail. It should be understood that the foregoing descriptions are merely specific implementations of the present invention.

In conclusion, the foregoing embodiments are merely intended for describing the technical solutions of this application, but not for limiting this application. Although this application is described in detail with reference to the foregoing embodiments, a person of ordinary skilled in the art should understand that modifications may still be made to the technical solutions described in the foregoing embodiments or equivalent replacements may be made to some technical features, and such modifications or replacements do not cause the essence of the corresponding technical solutions to depart from the scope of embodiments of this application.

## Claims

1. A method for monitoring time synchronization, comprising:
obtaining, by a first network device, synchronization path information, wherein the synchronization path information is information about a synchronization path between a first time synchronization device and a time source;
obtaining, by the first network device, time offset information of a plurality of time synchronization devices, wherein the time offset information of each of the plurality of time synchronization devices is information about a time offset between the time synchronization device and an upstream time device, the plurality of time synchronization devices are time synchronization devices on the synchronization path, and the plurality of time synchronization devices are all time synchronization devices on the synchronization path; and
calculating, by the first network device, an offset between time of the first time synchronization device and time of the time source based on the synchronization path information and the time offset information of the plurality of time synchronization devices.

2. The method according to claim 1, wherein the time offset information of each time synchronization device comprises a time offset, and the time offset is an offset between time of the time synchronization device and time of the upstream time device.

3. The method according to claim 2, wherein the calculating, by the first network device, an offset between time of the first time synchronization device and time of the time source based on the synchronization path information and the time offset information of the plurality of time synchronization devices comprises:
calculating, by the first network device, the offset between the time of the first time synchronization device and the time of the time source based on the synchronization path information and time offsets in the time offset information of the plurality of time synchronization devices.

4. The method according to claim 3, wherein the calculating, by the first network device, the offset between the time of the first time synchronization device and the time of the time source based on the synchronization path information and time offsets in the time offset information of the plurality of time synchronization devices comprises:
adding, by the first network device, the time offsets in the time offset information of the plurality of time synchronization devices, to obtain the offset between the time of the first time synchronization device and the time of the time source.

5. The method according to any one of claims 2 to 4, wherein the time offset information of each time synchronization device further comprises a timestamp, and the timestamp is used by the first network device to calculate the offset between the time of the first time synchronization device and the time of the time source.

6. The method according to claim 5, wherein a range of timestamps in the time offset information of the plurality of time synchronization devices is within one time period.

7. The method according to any one of claims 1 to 6, wherein when the synchronization path meets a first condition, the first network device calculates the offset between the time of the first time synchronization device and the time of the time source based on the synchronization path information and the time offset information of the plurality of time synchronization devices.

8. The method according to claim 7, wherein the first condition is that performance of a device on the synchronization path is abnormal.

9. The method according to any one of claims 1 to 8, further comprising:
sending, by the first network device, a request to the plurality of time synchronization devices on the synchronization path based on the synchronization path information, wherein the request is used to request the time offset information of the time synchronization devices.

10. The method according to any one of claims 1 to 9, wherein the synchronization path does not comprise the first network device.

11. The method according to any one of claims 1 to 9, wherein the synchronization path comprises the first network device.

12. A method for monitoring time synchronization, comprising:
sending, by a time synchronization device on a synchronization path, time offset information of the time synchronization device to a first network device, wherein the time offset information is information about a time offset between the time synchronization device and an upstream time device, and the time offset information is used by the first network device to calculate a time offset of the synchronization path.

13. The method according to claim 12, wherein the time offset information of the time synchronization device comprises a time offset, the time offset is an offset between time of the time synchronization device and time of the upstream time device, and the time offset is used by the first network device to calculate the time offset of the synchronization path.

14. The method according to claim 13, wherein the time offset information of the time synchronization device further comprises a timestamp, and the timestamp is used by the first network device to calculate the time offset of the synchronization path.

15. The method according to any one of claims 12 to 14, wherein the time synchronization device receives a request sent by the first network device, wherein the request is used to request the time offset information of the time synchronization device.

16. A method for monitoring time synchronization, wherein the method is performed by a communication system, the communication system comprises a first network device and a plurality of time synchronization devices, and the method comprises:
obtaining, by the first network device, synchronization path information, wherein the synchronization path information is information about a synchronization path between a first time synchronization device and a time source;
sending, by the plurality of time synchronization devices, time offset information of the time synchronization devices to the first network device, wherein the time offset information of each time synchronization device is information about a time offset between the time synchronization device and an upstream time device, and the plurality of time synchronization devices are time synchronization devices on the synchronization path; and
calculating, by the first network device, an offset between time of the first time synchronization device and time of the time source based on the synchronization path information and the time offset information of the plurality of time synchronization devices.

17. The method according to claim 16, wherein the time offset information of each time synchronization device comprises a time offset, and the first network device adds the time offsets in the time offset information of the plurality of time synchronization devices, to obtain the offset between the time of the first time synchronization device and the time of the time source.

18. The method according to claim 17, wherein the time offset information of each time synchronization device further comprises a timestamp, and when a range of timestamps in the time offset information of the plurality of time synchronization devices is within one time period, the first network device adds the time offsets in the time offset information of the plurality of time synchronization devices, to obtain the offset between the time of the first time synchronization device and the time of the time source.

19. The method according to any one of claims 16 to 18, wherein the first network device sends a request to the plurality of time synchronization devices on the synchronization path based on the synchronization path information, wherein the request is used to request the time offset information of the time synchronization devices.

20. A first network device, comprising:
a memory, wherein the memory comprises computer-readable instructions; and
a processor connected to the memory, wherein when the computer-readable instructions are executed by the processor, the first network device is enabled to perform the method according to any one of claims 1 to 11.

21. A first network device, comprising a processing module and a sending module, wherein the processing module is configured to:
obtain synchronization path information, wherein the synchronization path information is information about a synchronization path between a first time synchronization device and a time source;
obtain time offset information of a plurality of time synchronization devices, wherein the time offset information of each of the plurality of time synchronization devices is information about a time offset between the time synchronization device and an upstream time device, and the plurality of time synchronization devices are time synchronization devices on the synchronization path; and
calculate an offset between time of the first time synchronization device and time of the time source based on the synchronization path information and the time offset information of the plurality of time synchronization devices.

22. The first network device according to claim 21, wherein the time offset information of each time synchronization device comprises a time offset, and the time offset is an offset between time of the time synchronization device and time of the upstream time device.

23. The first network device according to claim 22, wherein that the processing module is configured to calculate an offset between time of the first time synchronization device and time of the time source based on the synchronization path information and the time offset information of the plurality of time synchronization devices comprises:
the processing module is configured to calculate the offset between the time of the first time synchronization device and the time of the time source based on the synchronization path information and time offsets in the time offset information of the plurality of time synchronization devices.

24. The first network device according to claim 23, wherein that the processing module is configured to calculate the offset between the time of the first time synchronization device and the time of the time source based on the synchronization path information and time offsets in the time offset information of the plurality of time synchronization devices comprises:
the processing module is configured to add the time offsets in the time offset information of the plurality of time synchronization devices, to obtain the offset between the time of the first time synchronization device and the time of the time source.

25. The first network device according to any one of claims 22 to 24, wherein the time offset information of each time synchronization device further comprises a timestamp, and the timestamp is used by the processing module to calculate the offset between the time of the first time synchronization device and the time of the time source.

26. The first network device according to claim 25, wherein a range of timestamps in the time offset information of the plurality of time synchronization devices is within one time period.

27. The first network device according to any one of claims 21 to 26, wherein the sending module is configured to send a request to the plurality of time synchronization devices on the synchronization path based on the synchronization path information, wherein the request is used to request the time offset information of the time synchronization devices.

28. A time synchronization device, comprising:
a memory, wherein the memory comprises computer-readable instructions; and
a processor connected to the memory, wherein when the computer-readable instructions are executed by the processor, the time synchronization device is enabled to perform the method according to any one of claims 12 to 19.

29. A time synchronization device, comprising a sending module and a receiving module, wherein the sending module is configured to:
send time offset information of the time synchronization device to a first network device, wherein the time synchronization device is a device on a synchronization path, the time offset information is information about a time offset between the time synchronization device and an upstream time device, and the time offset information is used by the first network device to calculate a time offset of the synchronization path.

30. The time synchronization device according to claim 29, wherein the time offset information of the time synchronization device comprises a time offset, the time offset is an offset between time of the time synchronization device and time of the upstream time device, and the time offset is used by the first network device to calculate the time offset of the synchronization path.

31. The time synchronization device according to claim 30, wherein the time offset information of the time synchronization device further comprises a timestamp, and the timestamp is used by the first network device to calculate the time offset of the synchronization path.

32. The time synchronization device according to any one of claims 29 to 31, wherein the receiving module is configured to:
receive a request sent by the first network device, wherein the request is used to request the time offset information of the time synchronization device.

33. A communication system, comprising a first network device and a plurality of time synchronization devices, wherein the first network device is the first network device according to any one of claims 20 to 27, and each of the plurality of time synchronization devices is the time synchronization device according to any one of claims 28 to 32.

34. A computer-readable storage medium, wherein the computer-readable storage medium stores instructions, and when the instructions run on a processor, the processor is enabled to perform the method according to any one of claims 1 to 19.

35. A computer program product comprising instructions, wherein when the computer program product runs on a processor, the processor is enabled to perform the method according to any one of claims 1 to 19.
